# EUROPEAN PATENT APPLICATION

(11) **EP 3 258 099 A1**
(43) Date of publication of application: **20.12.2017**
(21) Application number: 16174829.8
(22) Date of filing: 16.06.2016
(51) Int. Cl.: F03D 80/80, F03D 9/25, F03D 80/50, H02K 7/18, H02K 15/00, H02K 15/02, H02K 15/03

(54) **REMOVING AND INSTALLING STATOR COMPONENTS OF A WIND TURBINE GENERATOR VIA WIND TURBINE HUB**

(71) Applicant: Siemens Aktiengesellschaft, 80333 München (DE)
(72) Inventor: Eriksen, Uffe, 8700 Horsens (DK); Munk-Hansen, Thorkil, 7323 Give (DK); Soe, Jeppe, 8410 Rønde (DK); Thygesen, Claus, 8670 Låsby (DK)

(57) **Abstract**

It is described a method for removing a stator component (614) from a generator (100) being installed at a nacelle (184) of a wind turbine (180). The method comprises (a) transferring the stator component (614) from a stator frame structure (110) of the generator (100) to a component exchange tool (230) which is installed at a hub (194) of the wind turbine (180); (b) handing over the stator component (614) from the component exchange tool (230) to a handling equipment (250); and (c) removing the stator component (614) from the hub (194) to a predetermined unloading region (272) by controlling the handling equipment (250). It is further described a corresponding method for installing a further stator component (614) at a wind turbine (180). Further, a method and a component exchange tool (230) for exchanging stator components (614) of a wind turbine generator (100) are described. Furthermore, a wind turbine (180) being equipped with such a component exchange tool (230) is described in this document.

## Description

### Field of invention

The present invention relates to the technical field of electric generators for wind turbines. Specifically, the present invention relates to a method for removing a stator component from a wind turbine generator as well as a method for installing a further stator component at a wind turbine. Further, the present invention relates to a method and a component exchange tool for exchanging stator components of a wind turbine generator. Furthermore, the present invention relates to wind turbine being equipped with such a component exchange tool.

### Art Background

Wind turbines can be erected on-shore or off-shore. Large wind turbines being capable of providing an electric power up to about 6MW are typically installed off-shore. In particular for maintenance reasons self-excited generators having a rotor assembly with permanent magnets are employed. In the near future wind turbines being capable of providing an electric power in the order of 15MW will be provided by wind turbine manufactures having a special expertise in the field of off-shore wind turbines. For several technical reasons an electric generator being capable of providing 15MW of electrical power must have a diameter in the order of 10m. For efficiency reasons an air gap between (a) the coils of stator segments of the stator assembly and (b) the (permanent) magnets of the rotor assembly should be kept small. Therefore, such a large generator must be built up with an extreme high constructional precision. Further, the large size of such a generator requires special solutions not only for assembling but also for maintaining the generator. A maintenance work may include service tasks such as e.g. an exchange of a permanent magnet on the rotor side and an exchange of a stator segment on the stator side. In operation, a plurality of permanent magnets spatially move relative to a plurality of stator segments and cause a time varying magnetic flux through a plurality of conductor coils of the stator segments.

EP 2 555 393 B1 discloses an apparatus for loading magnet pole pieces onto an electric machine. The apparatus comprises (a) a positioning means configured to hold a magnet pole piece of a plurality of magnet pole pieces in place relative to its designated position and (b) a transfer means configured to simultaneously transfer a plurality of magnet pole pieces from the positioning means onto the electric machine.

EP 2 536 007 A1 discloses a method for exchanging stator segments in a generator which comprises a stator, a rotor and an air gap extending between the stator and the rotor. Exchanging stator segments involves an assembling and disassembling of the generator whereby a distance-element is arranged in the air gap in a way that the rotor and the stator are contactless movable in relation to each other. In case the generator is installed within a nacelle of a wind turbine a stator segment, when being attached to a rope, can be lifted up and down (a) by means of a hoist being installed within a hub of the wind turbine or (b) by means of a crane being installed at the roof of the nacelle.

There may be a need for facilitating an exchange of components of a generator of a wind turbine.

### Summary of the Invention

This need may be met by the subject matter according to the independent claims. Advantageous embodiments of the present invention are described by the dependent claims.

According to a first aspect of the invention there is provided a method for removing a stator component from a generator being installed at a nacelle of a wind turbine. The provided method comprises (a) transferring the stator component from a stator frame structure of the generator to a component exchange tool which is installed at a hub of the wind turbine; (b) handing over the stator component from the component exchange tool to a handling equipment; and (c) removing the stator component from the hub and/or from the component exchange tool to a predetermined unloading region by controlling the handling equipment.

The described stator component removal method removal method is based on the idea that a dedicated component exchange tool, which is mounted to the hub, can be used for bringing the stator component out from the generator in a fast, safe, and effective manner. The described removal method may be carried out in particular in connection with maintenance work when a broken, defective, and/or worn out stator component has to be replaced by another working stator component.

The "stator component" may be any part of the generator which is mechanically connected directly or indirectly to the stator respectively the stator frame structure. Examples for the stator component may be for instance electric cables or cabling modules which are used for conducting electric currents being generated by stator windings to a current receptor such as e.g. a power converter of the wind turbine. Further, a cooling installation for cooling the generator may be a stator component. Furthermore, stator components may be also be mechanical parts such as bearing elements which can be removed with the described removal method.

In this document the term "component exchange tool" may particularly denote any drivable mechanical structure which is configured for temporarily receiving and/or accommodating the stator component and handling the stator component at the hub. Thereby, the component exchange tool may be adapted to the shape of the stator component which is to be removed. The component exchange tool may be in particular a component exchange tool as described below with reference to several embodiments.

Further, the term "installed at the hub" may particularly denote that the respective assembly, i.e. the component exchange tool, is mounted to the hub such that it rotates together with the hub when the hub is rotated around a rotational axis of a wind rotor (and a rotational axis of a generator rotor). In this context a wind rotor comprises (i) the hub and (ii) rotor blades extending radially from the hub. In normal operation of the wind turbine a rotation of the hub is caused by wind driving the wind rotor. For carrying out a maintenance procedure the hub may also be rotated by a special turning device which engages with a rotor assembly of the generator rotor and/or a shaft rotatively connecting the hub with the rotor assembly.

Further, the term "hub" may particularly denote a central portion of the wind rotor which comprises strong mechanical connection means for attaching or fixing (the radially inner end of) the rotor blades. Thereby, the rotor blades are attached in such a manner that they are rotatable around their longitudinal axis for allowing a rotor blade pitching. In other words, the term "hub" may denote a structural component of the wind turbine which is mechanically and functionally connected in between the blade(s) and the rotor assembly of the generator. Specifically, the hub may be used for mechanically transmitting a momentum of force from the wind driven blade(s) to the rotor assembly in order to drive the rotor assembly. Typically, the hub is located outside from the nacelle.

Further, the term "handling equipment" may particularly denote any structural assembly which is capable of moving the stator component, after having received the stator component from the component exchange tool, to the predetermined unloading region. Thereby, the "predetermined unloading region" may be any position from which the stator component can be transported away for instance to a service or repair station or to a waste disposal or recycling site.

According to an embodiment of the invention the stator component is a stator segment which comprises at least one stator winding. This may provide the advantage that with the described method a type of stator component can be removed which type is typically more sensitive than other types of stator components and which, as a consequence thereof, have to be replace more often than the other more robust stator components.

In this context it should be clear that in normal generator operation the stator winding, also called stator coil, is used for "picking up" a time alternating magnetic flux and, in response thereto, for generating at least a portion of the overall output current of the generator. For this reason a plurality of stator segments are provided which are arranged around a rotational axis of the generator, wherein each stator segment comprises at least one conductor coil in which during normal operation of the electric generator magnetic induction takes place.

According to a further embodiment of the invention transferring the stator component comprises (a) fastening the stator component to the component exchange tool and/or (b) unfastening the stator component from the stator frame structure.

Unfastening the stator component from the stator frame structure may comprises releasing all fastening means which are respectively which have been used for fixing the stator component to the stator frame structure. Such fastening means may be for instance screws and/or bolts.

Fastening the stator component to the component exchange tool may be carried out also by means of screws and/or bolts. In particular jacking screws may be used.

According to a further embodiment of the invention the method further comprises removing at least one magnet, in particular a permanent magnet, from a rotor frame structure of the generator, before unfastening the stator component from the stator frame structure. With respect to an air-gap of the generator, the at least one magnet is located opposite to the stator component.

Removing the at least one magnet facing the stator component may provide the advantage that for the described transfer of the stator component from the stator frame structure to the component exchange tool there is available sufficient space. Specifically, when de-assembling the stator component from the stator frame structure and, even more important, when (spatially) transferring the stator component to the component exchange tool, in particular by moving, further in particular by shifting, there is only a very reduced risk of (further) damaging the stator component and/or the respective magnet for instance because at least one stator winding jams or scratches at the magnet.

It is mentioned that according to preferred embodiments only those magnets are removed from rotor assembly which are necessary for exposing sufficient space within the generator the stator such that a safe stator segment removal can be accomplished.

It is further mentioned that preferably not only the stator components but also the respective magnets are removed when they are located in the upright (12:oo o'clock) position. At this or close to this position there is typically enough space for performing the stator component exchange. In particular the tower of the wind turbine does not impede a stator component exchange. A corresponding rotation of the rotor frame structure (for bringing the respective magnets into the desired 12:oo o'clock position) can be accomplished by at least one turning device as described below.

According to a further embodiment of the invention transferring the stator component comprises shifting the stator component along an axial direction of the generator. Thereby, the mentioned axial direction may be in particular a direction parallel to the rotational axis of a rotor frame structure of the generator, the hub and/or wind rotor.

Taking the stator component out of the (remaining) stator frame structure along an (exclusively) axial direction may provide the advantage that the assembly work, which has to be carried out with a stator assembly comprising the stator frame structure and a plurality of stator components, can be reduced to a minimum. In particular, when axially shifting out the respective stator component it may not be necessary to de-assemble other stator components which need not to be removed from the stator frame structure.

It is mentioned that in practice the step of transferring the stator component may not exclusively include a pure axial shift. A safe stator component transfer may also include a small movement in radial direction immediately after releasing a fixation of the stator component to or at the stator frame structure.

According to a further embodiment of the invention shifting the stator component comprises moving a carriage device, which together with an exchange tool frame structure forms the component exchange tool, from an inner position to an outer position. Thereby, the exchange tool frame structure is mounted to the hub and the stator component is temporarily attached to the carriage device.

The exchange tool frame structure may comprise suitable guiding structures which engage with complementary guiding elements of the carriage device (or vice versa) such that there will be a spatially precise movement of the stator component along the axial direction.

The inner position may be located within the stator frame structure. In any case, the inner position may be the position of the carriage device, at which the stator component, without being moved along the axial direction, can be committed from the stator frame structure to the carriage device. Correspondingly, the outer position may be located outside from the generator in the region of the hub. In any case, the inner position may be the position of the carriage device, at which the stator component, without being moved along the axial direction, can be handed over to the handing equipment.

According to a further embodiment of the invention temporarily attaching the stator component to the carriage device comprises (a) when the carriage device is in the inner position, (a1) establishing a mechanical connection between the stator component and the carriage device and (a2) releasing a mechanical connection between the stator component and the stator frame structure; and (b) when the carriage device is in the outer position, (b1) establishing a mechanical connection between the stator component and the handling equipment and (b2) releasing the mechanical connection between the stator component and the carriage device. This may provide the advantage that any transfer of the stator component from one entity to another entity can be realized without having any axial movement. This makes the described stator component transfer very safe. Preferably, apart from a potentially non-avoidable axial movement of the stator component, which movement may be related to overcoming a radial clearance, there may be no further non-axial movement.

In case the stator component is a stator segment it may also be necessary to release or open an electrical connection between the respective coil(s) of the stator segment and a stator related wiring. Thereby, the stator related wiring may be a wiring being used for guiding the generated electric current to the above mentioned current receptor such as e.g. a power converter.

In order to make an implementation of the described method particularly easy the described inner position may be defined by an inner endpoint of the potential movement of the carriage. Correspondingly, the described outer position may be defined by an outer endpoint of the potential movement of the carriage with respect to the exchange tool frame structure.

According to a further embodiment of the invention the component exchange tool is detachably mounted to the hub. This may provide the advantage that with one component exchange tool different wind turbines can be maintained, wherein the maintenance includes a removal of a stator component and, subsequently, an installation of a further stator component such that the stator component has been replaced by the further stator component.

In this respect "detachably mounted" may particularly mean that after carrying out the described method the component exchange tool can be removed from the hub. This means that during normal operation of the respective wind turbine the component exchange tool is not attached to the hub respectively the wind rotor.

According to a further embodiment of the invention the method further comprises rotating the hub from a second angular position to a first angular position such that (i) the stator component is transferred from the stator frame structure to the component exchange tool, when the hub is in the second angular position, and (ii) the stator component is handed over from the component exchange tool to the handling equipment, when the hub is in the first angular position.

With a proper rotational movement of the hub which is carried out (a) after transferring the stator component to the component exchange tool and (b) before the stator component is handed over to the handling equipment the handling equipment can take over the stator component always at the same (convenient) first angular position. This may mean that irrespective of the location where the removed stator component has been installed at (the stator frame of) the generator the handling equipment can easily and in a reliable manner take over the stator component. Further, this makes a design of the handling equipment easy.

The second angular position may be defined by the (angular) location or position of the respective stator component being mounted to the stator frame structure before the described stator component removal method is started. The first angular position may be any angular position which is suitable for handing over the stator component to the handling equipment. This means that the first angular position may depend on the design of the handling equipment.

Although there is no need to define an absolute angle for the first angular position and/or the second angular position it may be convenient to use the position of the installed component exchange tool as an angular reference for defining the first angular position and/or the second angular position.

According to a further embodiment of the invention in the first angular position the component exchange tool is located above a rotational axis of the generator. This may provide the advantage that the handling equipment can take over the stator component from above without being interfered of disturbed by the mechanical structure of the hub or any other wind rotor component being radially located close to the rotational axis.

In this respect the term "located above" may mean that, with respect to the direction of gravity, in the first angular position at least a part of the component exchange tool is located higher that the rotational axis of the generator. Preferably, in the first angular position the component exchange tool may be located exactly above the rotational axis. Descriptively speaking, in the first angular position the component exchange tool may be at the "12 o'clock" position when considering the rotational axis as the axis of a clock.

According to a further embodiment of the invention rotating the hub comprises driving a rotor frame structure of the generator by means of at least one turning device being mounted to the stator frame structure and engaging with the rotor frame structure.

The turning device may be installed at or within the generator in a fixed or in a detachable manner. Thereby, the turning device may be mounted to a base plate of the stator frame structure and at the rotor frame structure there may be mounted an annular structure. The annular structure may have an engagement structure which is configured for engaging with an engagement element of the turning device. In an easy and simple configuration the engagement element may be a gear wheel and the engagement structure may be a toothed surface of the annular structure.

It is mentioned that an appropriate turning device may also rotate the hub when there are no rotor blades mounted. Further, at least when the turning device or several turning devices have a sufficient power the hub may even be rotated in an unbalanced state, i.e. when there is at least one rotor blade missing. This may provide the advantage that carrying out the described method can be combined with an exchange procedure of a rotor blade.

According to a further embodiment of the invention the method further comprises blocking a rotational movement of the hub during transferring the stator component and/or during handing over the stator component to the handling equipment. This may provide the advantage that the procedures of (a) transferring the stator component from the stator frame structure to the component exchange tool and/or (b) handing over the stator component from the component exchange tool to the handling equipment can be carried out in a reliable manner because any unwanted rotational movement of the hub relative to the stator frame structure and/or relative to the handling equipment can be prevented. As a consequence, the steps of transferring and or handing over can be realized under stable mechanical conditions which significantly improve the reliability and reduce the error rate of the respective steps.

Blocking the rotational movement of the hub may be accomplished by means of an appropriate brake system and/or an appropriate interlock system which both engage in between the stator frame structure and the rotor frame structure. By contrast to the interlock system the described break system may further be used for slowing down a rotational movement of the hub.

The break system may comprise at least one caliper and a brake disk. At least a part of the above mentioned annular structure being attached to the rotor frame structure may be used for realizing the brake disk.

The interlock system may comprise at least one shiftable bolt which in an "open position" engages only with the stator frame structure and in a "close position" engages both with the stator frame structure and the rotor frame structure.

According to a further embodiment of the invention the handling equipment comprises a crane system.

The crane system may comprise a rope winch which can be used for lifting and lowering the stator component. The crane system may be attached to the nacelle. Although the crane system may be located within (a housing of) the nacelle it seems to be preferably if the crane system or at least a rigid structural element, e.g. a cantilever of the crane system, is located over or above (the roof of) the nacelle.

The rigid structural element may be pivotable such that a (vertical) rope of the crane system can be shifted horizontally along the rotational axis of the hub. This may allow the handling equipment to move the stator component not only vertically (by changing the length of the rope) but also horizontally (by pivoting the rigid structural element).

According to a further embodiment of the invention the unloading region is located on a roof of the nacelle. This may provide the advantage that the removed stator segment can be transported away from the respective wind turbine for instance by means of a helicopter.

According to a further aspect of the invention there is provided a method for installing a further stator component at a generator being installed at a nacelle of a wind turbine. The provided stator component installation method comprises (a) providing the further stator component at a loading region; (b) moving the further stator component by means of a controlled handling equipment from the loading region to a component exchange tool which is installed at a hub of the wind turbine; (c) handing over the further stator component from the handling equipment to the component exchange tool; and (d) transferring the further stator component from the component exchange tool to a stator frame structure of the generator.

In accordance with the above described stator component removal method also the stator component installation method is based on the idea that a dedicated component exchange tool, which is installed at or mounted to the hub, can be used for bringing the stator component into the generator in a fast, safe, and effective manner. The described installation method may be carried out in particular in connection with maintenance work when a broken, defective, and/or worn out stator component has to be replaced by the (working) further stator component.

With regard to the term "further stator segment" reference is made to the term "stator component" which has been elucidated above. The same holds for the other terms which have already been explained above in connection with the stator component removal method.

It is pointed out that the described stator component installation method corresponds, in a complementary manner, to the above described stator component removal method. In this context it should be clear that the sequence of the accomplished steps of the stator component installation method is inverse to the sequence of the corresponding steps of the stator component removal method. This also holds for possible additional and/or subordinate steps of the stator component installation method which correspond to the additional and/or to the subordinate steps described above for the stator component removal method.

According to a further embodiment of the invention the method further comprises rotating the hub from a first angular position to a second angular position such that (i) the further stator component is handed over from the handling equipment to the component exchange tool when the hub is in the first angular position and (ii) the further stator component is transferred from the component exchange tool to the stator frame structure when the hub is in the second angular position.

The described defined rotational movement is carried out (a) after handing over the further stator component from the handling equipment to the component exchange tool and (b) before transferring the further stator component from the component exchange tool to the stator frame structure.

In accordance with the corresponding embodiment of the stator component removal method the first angular position may be defined in order to allow a safe and effective handing over the further stator component. Thereby, characteristics of the handling equipment and/or the component exchange tool may be taken into account. Preferably, in the first angular position the component exchange tool may be located exactly above the rotational axis, which corresponds to the above mentioned "12 o'clock" position. Further, as has also already been mentioned above, the second angular position may be defined by the (angular) location or destination where the further stator component is supposed to be mounted to the stator frame structure.

According to a further aspect of the invention there is provided a method for exchanging stator components of a generator being installed at a nacelle of a wind turbine. The provided stator component exchange method comprises (a) removing a stator component from a stator frame structure of the generator in accordance with the stator component removal method as described above; and (b) installing a further stator component at the stator frame structure of the generator in accordance with the stator component installation method as described above.

The described stator component exchange method is based on the idea that a component exchange tool, which is mounted to the hub, can be of useful assistance both (i) for removing a stator component and (ii) for installing a further stator component in a safe and effective manner. Preferably, an intentional and precisely controlled rotational movement of the hub (without the wind rotor being driven by wind) is employed for bringing the component exchange tool in defined angular positions. Thereby, a first angular position may be defined with respect to the handling device in order to allow (i) for a safe and effective handing over of the stator component to the component exchange tool and/or (ii) for a safe and effective handing over of the further stator component from the handling equipment to the component exchange tool. A second angular position may be defined by facilitating (i) a transfer of the stator component from the stator frame structure to the component exchange tool and (ii) a transfer of the further stator component from the component exchange tool to the stator frame structure.

It is mentioned that in order to facilitate a smooth and effective supply of (new) further stator components and removal of (old) stator components the described unloading region may be the same or may be at least very close to the loading region.

According to a further aspect of the invention there is provided a component exchange tool for exchanging stator components of a generator being installed at a nacelle of a wind turbine. The provided component exchange tool comprises (a) an exchange tool frame structure being configured for being installed at a hub of the wind turbine; and (b) a carriage device, which is movable along an axial direction of the generator with respect to the exchange tool frame structure and which is configured for receiving a stator component, whereby the stator component is temporarily attached to the carriage device.

Also the described component exchange tool is based on the idea that, when being installed or mounted to the hub, it can be of valuable assistance for removing a stator component and/or for installing a further stator component. In this context, the described component exchange tool may be configured for carrying out the above described stator component removal method and the above described stator component installation method.

Preferably, the component exchange tool is detachably mounted to the hub. This means the component exchange tool may only rotate together with the hub around the rotational axis in case of a maintenance procedure in which at least one stator component is replaced by a further stator component. However, it may also be possible to fixedly attach the component exchange tool to the hub such that also during a normal wind turbine operation, when the component exchange tool comes not into operation, the component exchange tool rotates together with the hub.

The carriage device may be guided at the exchange tool frame structure in order to guarantee for a precise and smooth movement (exclusively) along the axial direction. For this reason the exchange tool frame structure may comprise suitable guiding structures which engage with complementary guiding elements of the carriage device (or vice versa).

According to a further embodiment of the invention the carriage device comprises a fork structure which is configured for engaging with corresponding openings formed at or within the stator component.

The described fork structure may correspond to a forklift. However, by contrast to the embodiment described here in a usual forklift a plane being defined by the more or less straight teeth of the forklift is always oriented horizontally. Here, the plane of the spikes or teeth of the fork structure is rotating together with a rotational movement of the hub. Therefore, it might be of advantage if the openings at or within the stator component surround the inserted spikes or teeth of the forklift completely within a plane which has a normal direction being parallel to the longitudinal extension of the respective forklift spike of tooth.

According to a further embodiment of the invention the fork structure comprises two telescopic fork spikes. Each telescopic fork spike comprises (a) a fork carrier rail; (b) a further fork carrier rail being shiftable along a longitudinal extension of the fork carrier rail; and (c) an elongated component support element being movable along the longitudinal extension of both the fork carrier rail and the further fork carrier rail.

Providing the fork structure with telescopic spikes may provide the advantage that when entering the region of the stator frame structure for receiving a demounted old stator component and/or for inserting a new stator component being supposed to be mounted the length of the telescopic spikes can simply be elongated. Further, elongating the telescopic spikes allows to increase the distance along which the stator component can be transferred in a translational manner along the axial direction of the generator. This provides for ensuring a high degree of reliability for the stator component transportation.

Further, when supporting the stator component at the shiftable elongated component support element the stator component can be moved along the elongated fork spikes without being slid at respectively rubbed against the upper surface of the respective telescopic fork spike. Due to the absence of any sliding friction between (the lower surface of) the stator component and the fork structure the stator component can be exchanged in a smooth and gentle manner. Of course, between the fork carrier rail and further fork carrier rail on the one hand and the elongated component support element on the other hand appropriate bearings can be used for reducing the mechanical friction for the elongated component support element when traveling along the fork carrier rail and/or the further fork carrier rail.

It is mentioned that the further fork carrier rail can be sifted along the fork carrier rail independently from a translational movement of the elongated component support element. By decoupling these two shift movements the operation of the component exchange tool can be made highly flexible.

According to a further embodiment of the invention each telescopic fork spike further comprises (a) a first fork carriage element being fixed to the further fork carrier rail and being guided at the fork carrier rail and/or (b) a second fork carriage element being fixed to the elongated component support element and being guided also at the fork carrier rail.

The two fork carriage element being fixed (preferably in a non-detachable manner) to one of the further fork carrier rail and the elongated component support element allow for significantly increasing the mechanical stability of the entire component exchange tool.

In a simple but effective configuration the first fork carriage element is fixed at one end of the shiftable further fork carrier rail. Accordingly, the second fork carriage element may be fixed at one end of the shiftable elongated component support element. In a preferred configuration, when shifting the elongated component support element the second fork carriage element is guided at the fork carrier rail and the elongated component support element is guided at the further fork carrier rail.

Further, the first fork carriage element and/or the second fork carriage element may be provided with a clamping mechanism which allows for temporarily blocking a (translational) movement of the further fork carrier rail respectively of the elongated component support element in particular during the process of detaching the stator component from or attaching the stator component to the stator frame structure of the generator. This allows for a reliable transfer of the stator component from the stator support structure to the component exchange tool (when removing the stator component) and vice versa from the component exchange tool to the stator support structure (when installing the stator component).

According to a further embodiment of the invention the exchange tool frame structure comprises (a) a support fragment being configured to be attached to the rotor frame structure; and (b) at least one support leg being fixedly mounted to the support fragment and being configured to be mounted at the hub. The at least one support leg may support the exchange tool frame structure against or at the hub. The at least one leg may be mounted to the hub by means of an appropriate mechanical connection using e.g. screws and/or bolts.

The described design of the exchange tool frame structure may provide the advantage that during a standstill of the hub the support fragment being attached to the stator frame structure may mechanically stabilize the entire exchange tool such that transferring the respective stator component will be even more safe and more reliable.

According to a further embodiment of the invention the component exchange tool further comprises a cover structure which is movably attached to the exchange tool frame structure and which is configured for protecting the stator component from ambience when being received by the component exchange tool. This may provide the advantage that during a rotation of the hub the (temporarily) received stator component can be protected from external environmental influences which could harm the stator component. In case of stator segments and in case of an off-shore wind turbine such environmental influences may be in particular salty air which could harm stator windings.

The cover structure may further be used in order to increase the operational safety of the entire stator segment removal. In particular, when the cover structure, which can be seen as a part of the component exchange tool rotating together with the rotor frame structure around the rotational axis, is not in a more or less upright position, components such as e.g. tools being needed by technicians, cannot fall away from the component exchange tool. In particular, a box of the component exchange tool a technician can enter for performing service tasks being related to stator component exchange can be (temporarily) closed by the described cover structure.

In this respect it is mentioned that within the generator and more specifically at the stator frame structure there may be provided at least one service platform. When rotating the rotor frame structure respectively the component exchange tool technicians can leave the above mentioned box in order not to rotate (together with the component exchange tool) around the rotational axis.

It is mentioned that the cover structure is movable not only with respect to the exchange tool frame structure but also with respect to the carriage device. In other words, it is not necessary that the cover structure moves together with the carriage device in the same manner. This may allow (the fork structure of) the carriage device to be inserted at least partially into the stator support structure when receiving or when releasing the stator component without being hampered by the cover structure.

In a preferred embodiment also the cover structure is guided at the exchange tool frame structure in such a manner that it can perform (exclusively) a simple axial movement or shift along the axial direction. However, also other types of movement such as e.g. a pivoting movement at a hinge being formed at the exchange tool frame structure may be possible.

According to a further aspect of the invention there is provided a wind turbine for generating electrical power, in particular an off-shore wind turbine. The provided wind turbine comprises (a) a tower; (b) a wind rotor, which is arranged at a top portion of the tower and which comprises at least one blade mounted to a hub; (c) an electric generator comprising a stator frame structure, a rotor frame structure, and a plurality of stator components being attached to the stator frame structure, wherein the rotor frame structure is mechanically coupled with the wind rotor; and (d) a component exchange tool as described above for exchanging stator components. The component exchange tool and in particular the exchange tool frame structure is installed at the hub.

Also the described wind turbine is based on the idea that the above elucidated component exchange tool can be of valuable assistance when removing a (defective or worn) stator component and replacing it by a (new or at least faultless) further stator component.

The stator component and the further stator component may be in particular a stator segment which comprises at least one stator winding for "picking up" a time alternating magnetic flux and, in response thereto, generating at least a portion of the overall output current of the generator.

According to a further aspect of the invention the wind turbine further comprises a spinner structure, which is attached to and which is covering the hub. Thereby, the component exchange tool is located within the spinner structure.

Providing the described spinner structure may have the advantage that the component exchange tool will be protected from external environmental impacts. Thus, a long lasting reliable operation of the component exchange tool can be ensured.

The spinner structure may be any physically three-dimensional structure which is capable of separating the hub and possibly sensitive components of the wind rotor, e.g. a blade pitch angle adjustment device, from (external impacts of) the environment. The spinner structure may also protect a front side of the nacelle and/or of the generator. Thereby, the front side may be the upwind side. In normal operation of the wind turbine the spinner structure rotates together with the hub around the rotational axis.

The spinner structure may also be denominated a nose cone, which preferably has a rounded tip and/or which tapers to a front end. As a consequence, the nose cone may contribute in improving the aerodynamic of the wind turbine by reducing the drag coefficient of the center portion of the wind rotor.

It is mentioned that the spinner structure may have a closable opening which can be used for inserting component exchange tool into the interior of the spinner and/or for removing the component exchange tool from the interior of the spinner. Preferably, the spinner structure comprises several spinner structure elements which together form the spinner structure.

According to a further embodiment of the invention the wind turbine further comprises a stator assembly comprising the stator frame structure and a plurality of stator components, in particular a plurality of stator segments. The electric generator may have an inner stator - outer rotor configuration.

The stator components and in particular the stator segments may be mounted circumferentially around the rotational axis of the generator.

In this context inner stator - outer rotor configuration may mean that the described stator assembly forms the stationary part of the electric generator. In other words, a rotor assembly respectively the rotor support structure, a part of which is located radially outwards from the stator segments, rotates around the stator assembly. Thereby, in operation, magnets, in particular permanent magnets, which are arranged at an inner surface of an outer rotor assembly ring of the rotor support structure cause a time varying magnetic flux at the location of the stator segments. Further, in between the magnets and the stator segments there is provided an air gap, which according to embodiments of the invention may have a dimension of at least approximately 10mm.

In this respect it is mentioned that in other embodiments of the invention the electric generator is realized with an inner rotor - outer stator configuration.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows in accordance with an embodiment of the invention a wind turbine comprising a spinner structure which covers a hub of the wind turbine.
- Figure 2: shows an installation of a component exchange tool to the hub through an access opening of the spinner structure.
- Figure 3: shows a rotational movement of the wind rotor in order to bring the installed component exchange tool from a first angular position to second angular position.
- Figure 4: indicates a sliding transfer of a stator segment being detachably attached to a sliding carriage device of the component exchange tool out from the generator into a cover structure protecting the stator component.
- Figure 5: shows in an enlarged view the attachment of the component exchange tool to both the hub and a generator housing.
- Figure 6: shows an uncovered access opening within the generator housing.
- Figure 7: shows an insertion of the carriage device into the generator housing via the access opening such that a fork structure of the carriage device engages with not depicted openings formed in the stator component.
- Figure 8: shows in a perspective sectional representation the fork structure which has entered a region of a stator frame structure of the generator and which engages with an opening formed within the stator component.
- Figure 9: shows a stator segment which is received by the carriage device and which has been removed from the stator frame structure.
- Figure 10: shows an unfastening of the stator segment together with the fork structure from the remaining carriage device of the component exchange tool.
- Figure 11: shows a transportation of the removed stator segment to an unloading region by means of a crane system.
- Figures 12: to 13 show different operational states of a component exchange tool having a fork structure with telescopic fork spikes.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

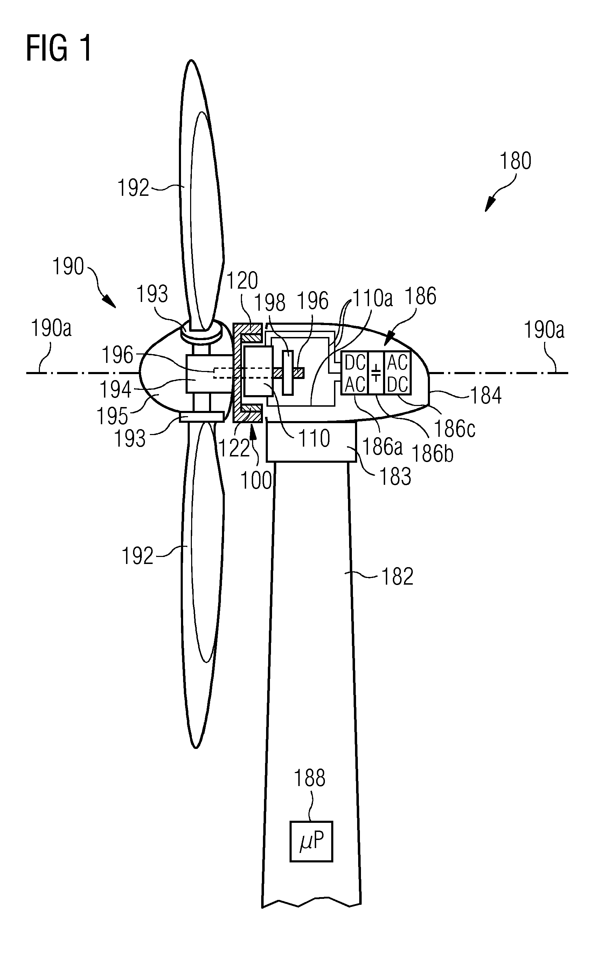

**Figure 1** shows a wind turbine 180 according to an embodiment of the invention. The wind turbine 180 comprises a tower 182, which is mounted on a non-depicted fundament. On top of the tower 182 there is arranged a nacelle 184. In between the tower 182 and the nacelle 184 there is provided a yaw angle adjustment device 183, which is capable of rotating the nacelle 184 around a not depicted vertical axis, which is aligned with the longitudinal extension of the tower 182. By controlling the yaw angle adjustment device 183 in an appropriate manner it can be made sure, that during a normal operation of the wind turbine 180 the nacelle 184 is always properly aligned with the current wind direction.

The wind turbine 180 further comprises a wind rotor 190 having three blades 192. In the perspective of Figure 1 only two blades 192 are visible. The wind rotor 190 is rotatable around a rotational axis 190a. The blades 192, which are mounted at a hub 194, extend radially with respect to the rotational axis 190a.

In between the hub 194 and a blade 192 there is respectively provided a blade adjustment device 193 in order to adjust the blade pitch angle of each blade 192 by rotating the respective blade 192 around a not depicted axis being aligned substantially parallel with the longitudinal extension of the blade 192. By controlling the blade adjustment device 193 the blade pitch angle of the respective blade 192 can be adjusted in such a manner that at least when the wind is not so strong a maximum wind power can be retrieved from the available wind power. However, the blade pitch angle can also be intentionally adjusted to a position, in which only a reduced wind power can be captured.

A spinner structure 195 covers the hub 195 and a not depicted stator component exchange tool which will be described below in detail. By means of the spinner structure 195, which may also be denominated a nose cone, the component exchange tool and other elements of the hub will be protected from rough external environmental impacts.

At the nacelle 184 there is provided an electric generator 100. In accordance with basic principles of electrical engineering the electric generator 100 comprises a stator assembly respectively a stator frame structure 110 and a rotor assembly respectively a rotor frame structure 120. As can be seen from Figure 1, the electric generator 100 is located between a front end of the nacelle 184 and the hub 194.

According to the embodiment described here the electric generator 100 is realized with a so called inner stator - outer rotor configuration. Permanent magnets 122 being attached to the rotor frame structure 120 travel around stator segments being attached at the stator assembly 110. In between the stator segments, which comprise coils or windings for picking up a time alternating magnetic induction, and the permanent magnets, there is formed an air gap. According to the exemplary embodiment described here the stator assembly 110 has an outer diameter in the order of 10m and the air gap has a size of 10mm. From these dimensions one can recognize that there are extreme high demands regarding the mechanical precision and stability for both the stator assembly 110 and the rotor assembly 120. Further, when exchanging a stator segment one has to do this with good care in order to avoid a damage of the stator segment and in particular of the stator segment windings.

The wind rotor 190 is rotationally coupled with the rotor assembly 110 by means of a rotatable shaft 196. A schematically depicted bearing assembly 198 is provided in order to hold in place both the wind rotor 190 and the rotor assembly 120. As can be seen from Figure 1 the shaft 196 extends along the rotational axis 190a. The rotational axis 190a is identic with a center axis of the stator assembly 110.

It is mentioned that there is also a not depicted bearing assembly being located within the generator 100. This bearing assembly supports the shaft 196 within the region where the shaft 196 is indicated with dashed lines.

It is further mentioned that the wind turbine 180 is a so called direct drive wind turbine wherein between wind rotor 190 and rotor assembly 110 there is not provided a gear box. However, it is mentioned that the electric generator 100 could also be driven indirectly via a gear box, which may be used to convert the number of revolutions of the wind rotor 190 typically into a higher number of revolutions of the rotor assembly 120.

In order to provide an AC power signal being matched with a utility grid the electric output of the stator assembly 110 is electrically connected to a power converter 186 by means of a three phase electric cable assembly. The respective cables are denominated with reference numeral 110a. The power converter 186 comprises a generator side AC-DC converter 186a, an intermediate DC bridge 186b, and a grid side DC-AC converter 186c. The AC-DC converter 186a and the DC-AC converter 196c comprise several not depicted high power semiconductor switches which, in a known manner, are arranged in a bridge configuration for each phase of an AC current provided by the electric generator 100.

The wind turbine 180 further comprises a control system 188 for operating the wind turbine 100 in a highly efficient manner. Apart from controlling for instance the yaw angle adjustment device 183 the depicted control system 188 is also used for adjusting the blade pitch angle of the blades 192 of the wind rotor 190 in an optimized manner.

In the following there is described in accordance with embodiments of the invention a concept for exchanging stator segments of the generator 100 through the spinner structure 195. This concept relies on a dedicated component exchange tool which, for the exchange procedure, can be detachably mounted to the hub 194 and to a from surface of the rotor assembly 120. The described concept uses the principle of a crane fork to lift and remove the stator segments from the stator frame structure 110 of the generator 100. In several Figures described below, the spinner structure is not shown in order to show relevant components being employed for the described exchange concept.

As will be described below in more detail, the component exchange tool comprises a support fragment and support legs attached thereto, a carriage device which can slide forwards and backwards along the support fragment, and a fork structure mounted to the carriage device which can be lifted by a nacelle crane system.

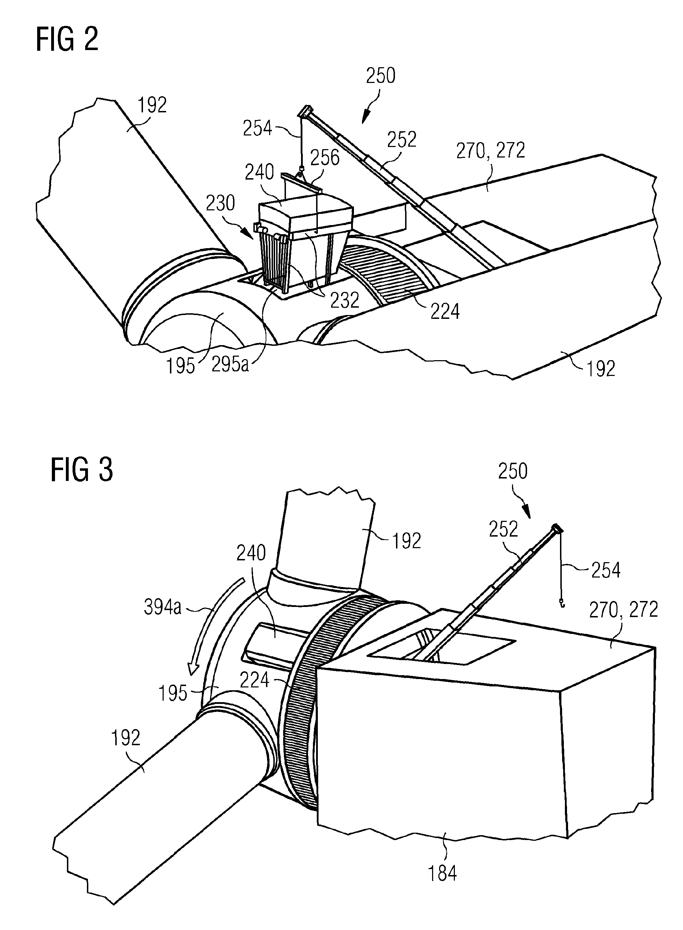

**Figure 2** shows an installation of such a component exchange tool 230 through an access opening 295a formed within the spinner structure 195 to the not depicted hub being covered by the spinner structure 195.

The component exchange tool 230 comprises an exchange tool frame structure 232 and a cover structure 240 mounted to the exchange tool frame structure 232. As will be described below in more detail, the cover structure 240 provides mechanical protection for a stator segment when carrying out a stator segment exchange according to the concept described in this document.

A handling equipment 250, which will later also be used for transporting stator segments, is used for carrying the component exchange tool 230 and for inserting it through an access opening 295 formed within the spinner structure 195. Before inserting the component exchange tool 230, the component exchange tool 230 (a) has been provided at a loading/unloading region 272 given on the roof 270 of the nacelle 184, (b) has been adopted by the handling equipment 250, and (c) has been transferred to the access opening 295a by means of the handling equipment 250.

According to the exemplary embodiment described here the handling equipment 250 is a crane system which comprises a pivotable cantilever 252, a rope 254, and a crossbar 256 as depicted in Figure 2.

It is mentioned that according to the exemplary embodiment described here the crane system 250 is an internal crane system. However, it should be clear that also an external crane system or a helicopter could be used as the handling equipment 250.

It is further mentioned that in the perspective view shown in Figure 2 a rotor housing 224 can be seen. The rotor housing 224 is a fixed part of the rotor assembly 120 shown in Figure 1. As has been indicated above, according to the exemplary embodiment described here the rotor housing 224 is very close to the hub 194 respectively the spinner 195. This means that by contrast to the schematic illustration if Figure 1, there is no or only an extreme short shaft connecting the hub 194 with the rotor housing 224 of the rotor support structure 120.

**Figure 3** shows a controlled rotational movement of the wind rotor in order to bring the installed component exchange tool 230 from a first angular position to second angular position. Thereby, the first position is the so called "12 o'clock" angular position shown in Figure 2. In this position the component exchange tool 230 can be inserted downwardly into the spinner structure 195 along a pure vertical direction. The second angular position is the angular position (or location) at which the stator segment, which is supposed to be removed, is built in the stator frame structure 110. The corresponding controlled rotational movement is indicated with the arrow 394a.

Descriptively speaking, with the rotational movement 394a the component exchange tool is aligned with the angular position of the (defect) stator segment which is supposed to be removed.

For realizing the controlled rotational movement 394a the hub respectively the wind rotor 190 may be rotated by a special non depicted turning device. Such a turning device may be attached to the stator assembly and may engage with the generator rotor or rotor assembly 120 and/or the shaft 196, which rotatively connects the hub 194 with the rotor assembly 120.

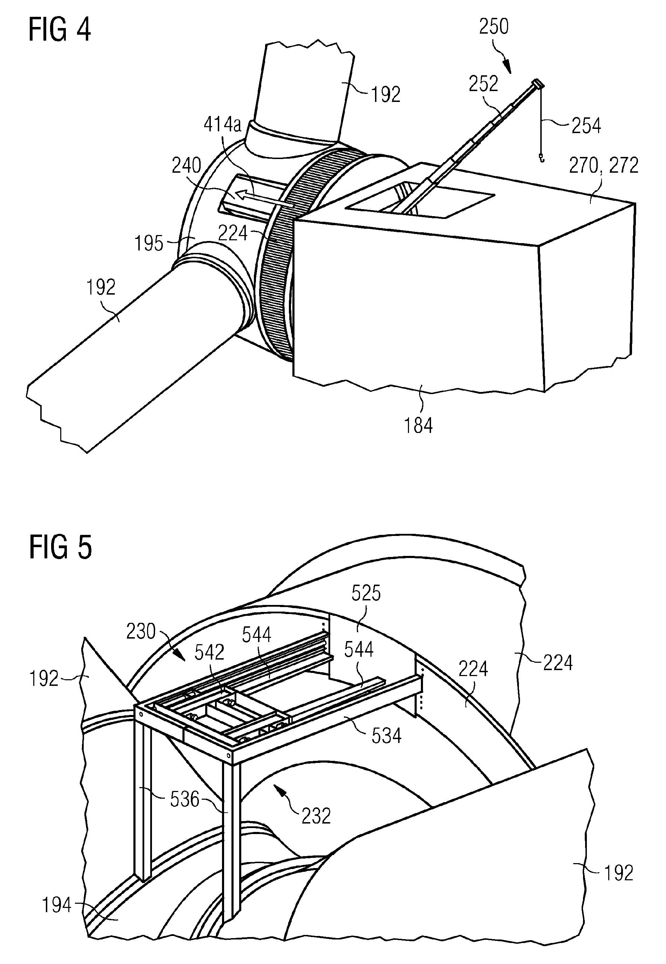

**Figure 4** indicates a sliding transfer of a not depicted stator segment being detachably attached to a sliding carriage device of the component exchange tool 230 out from the generator 100 into the cover structure 240 shown already in Figure 2. The sliding or shifting movement is indicated with an arrow denominated with reference numeral 414a.

**Figure 5** shows in an enlarged view the attachment of the component exchange tool 230 to both the hub 194 and a rotor housing 224 which is fixed part of the rotor assembly 120. As can be seen, according to the exemplary embodiment described here, the component exchange tool 230 comprises a support fragment 534 and two support legs 536. A carriage device 542 comprising a fork structure 544 can be shifted along a straight guiding structure of the support fragment 534 along an axial direction being parallel to the rotational axis 190a shown in Figure 1. As will be described below in more detail, the fork structure 544 can be dismounted from the remaining carriage device 542 and, when transporting the respective stator segment, can be mechanically connected to the stator segment.

For attaching the component exchange tool 230 to both the hub 194 and the rotor housing 224 the support fragment 534 is mounted to the rotor housing 224. Further, the support legs 536 are mounted to the hub 194. The support legs 536 help to support the weight of the extractive stator segment.

As can be taken from Figure 5, an access opening is formed within the rotor housing 224. In Figure 5 showing a scenario before inserting the fork structure into the rotor housing 224, the access opening is covered by an access cover 525.

Next, the access cover 525 is removed such that access is given to the respective stator segment, which angular position corresponds to the angular position of access opening.

As will be described below in detail, the extraction of a stator segment from (the stator frame structure of) the generator by means of the dedicated component exchange tool relies on the principle of a crane fork lift. This crane fork lift removes and lifts the respective stator segment from the stator support structure 110. The dedicated component exchange tool 230 comprises the support fragment 534, the two support legs 536, the carriage device 542 that can be slid forward and backward at the support fragment 534, and a fork structure 544 mounted to the carriage device 542. The entire component exchange tool 230 can be lifted by the crane system 250. In operation, the support fragment 534 is mounted to the rotor housing 224 and the support legs 536 are mounted to the hub to help to support the weight of the extracted stator segment.

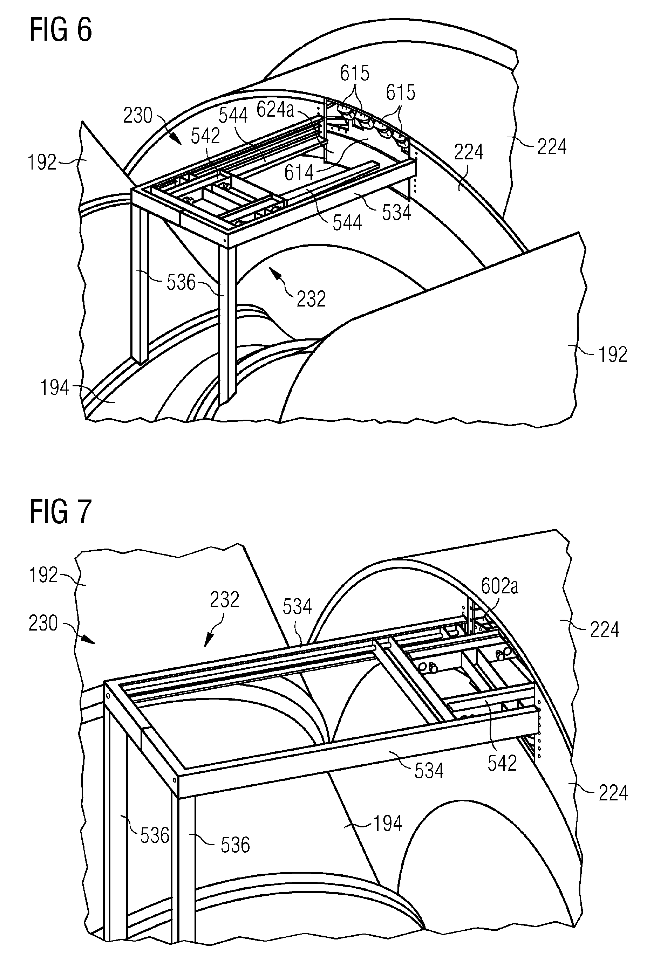

**Figure 6** shows the uncovered access opening 624a, i.e. the access cover 525 has been removed. A front portion of the respective stator segment 614 can be seen together with its stator (end) windings 615.

**Figure 7** shows an insertion of the carriage device 542 into the generator housing 502 via the access opening 624a. The fork structure 544 of the carriage device 542 is going to engage with not depicted openings formed in the stator segment 614.

According to the exemplary embodiment described here the openings are formed in flanges of the stator segment 614. Once the forks are position, the stator segment 614 can be bolted to the fork structure. Next, the stator segment 614 can be unbolted from the stator frame structure 110.

It is mentioned that at least before unbolting the stator segment 614 at least one non depicted permanent magnet (see reference numeral 122 in Figure 1) being mounted at the radially inner surface of the rotor housing 224 should be removed. According to the exemplary embodiment described here this is done by axially shifting the permanent magnet in a direction opposite to the direction of shifting the stator segment 614 out from the stator frame structure 110. By removing all magnets facing the stator component 614 there will be enough space for the stator segment 614 in order to prevent a damage of the stator segment 614 and/or the permanent magnet.

In order to further ensure that the stator segment 614 can be extracted in a safe manner, jacking screws can be adjusted on or at the carriage device 542. With this measure it can be ensured that the stator segments don't jam against each other when extracting the respective stator segment 614 by pulling it out from the stator frame structure 110 using a pulley or similar tools.

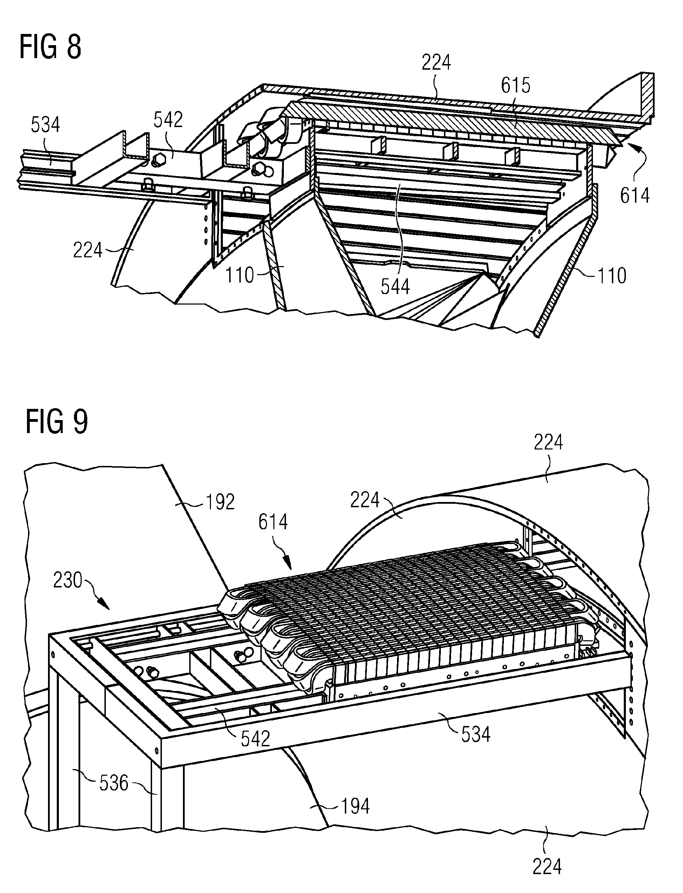

**Figure 8** shows in a perspective sectional representation the fork structure 544 which has entered a region of a stator frame structure 110 of the generator 100 and which engages with openings formed within the stator segment 614.

**Figure 9** shows the stator segment 614 which is received by the carriage device 542 and which has been removed from the stator frame structure 110.

Next, the hub 194 together with the installed component exchange tool 230 is turned back to the 12 o'clock position by means of a precisely controlled movement.

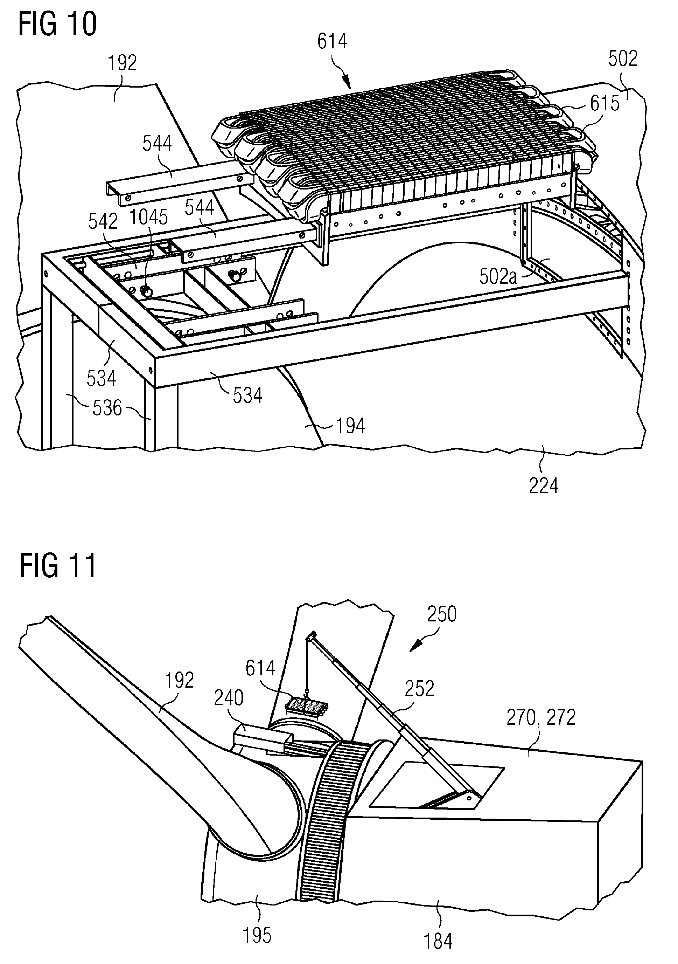

Finally, the fork structure 544 can be unmounted from the carriage device 542 by removing locking pins and then lifting the fork structure 544 together with the extracted stator segment 614 out of the exchange tool frame structure 232. **Figure 10** shows this unfastening of the stator segment 614 together with the fork structure 544 from the remaining carriage device 542 of the component exchange tool 230. In Figure 10 the locking pins are denominated with reference numeral 1045.

**Figure 11** shows a transportation of the removed or extracted stator segment 614 to the loading/unloading region 272 by means of the crane system 250.

After having successfully removed the (defective) stator segment 614 a further (working) stator segment can be installed into the stator frame structure 110. In order to also perform the corresponding installation procedure in a safe and effective manner, the above described procedure can be reversed. For each additional stator segment to be extracted the hub 194 respectively the wind rotor 190 is rotated such that the angular position of the component exchange tool 230 is aligned with the angular position of the additional stator segment which is to be removed and the entire procedure has to be repeated. However, for each stator segment to be removed, the component exchange tool 230 must be rotated again to the 12 o'clock position to remove each old stator segment and load the new stator segment.

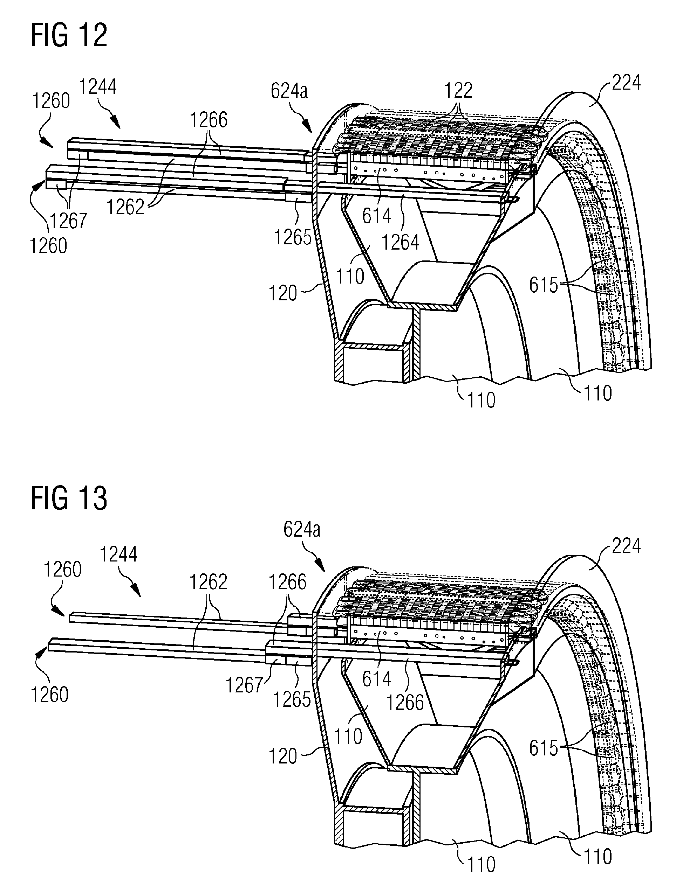

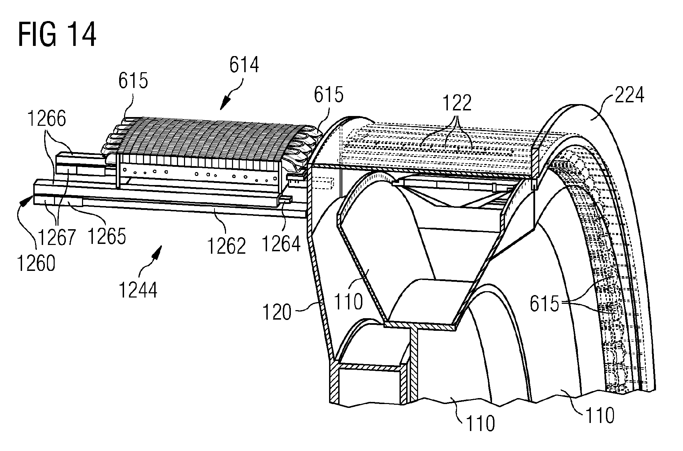

**Figures 12 to 13** show different operational states of a component exchange tool having a fork structure 1244 with telescopic fork spikes 1260. Each telescopic fork spike 1260 comprises a fork carrier rail 1262, a further fork carrier rail 1264 being shiftable along a longitudinal extension of the fork carrier rail 1262, and an elongated component support element 1266 being movable along the longitudinal extension of both the fork carrier rail 1262 and the further fork carrier rail 1264.

Each telescopic fork spike 1260 further comprises a first fork carriage element 1265 being fixed to the further fork carrier rail 1264 and being guided at the fork carrier rail 1262 and a second fork carriage element 1267 being fixed to the elongated component support element 1266 and being guided also at the fork carrier rail 1262.

In Figure 12 the fork structure 1244 is illustrated when being inserted (with its "front end" further fork carrier rail 1265) into the interior of the stator frame structure 110. Figure 13 shows the fork structure 1244 with its elongated component support elements 1266 being located also within (the region of) the stator frame structure 110 and being prepared for receiving a stator component 614 immediately after detaching the same from the stator frame structure 110. Figure 13 shows the fork structure 1244 after the elongated component support elements 1266 (together with the stator component 614) have been retraced from the stator frame structure 110. The stator component 614 is ready for being picked up by a crane system 250 as depicted in Figure 2.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method for removing a stator component (614) from a generator (100) being installed at a nacelle (184) of a wind turbine (180), the method comprising
transferring the stator component (614) from a stator frame structure (110) of the generator (100) to a component exchange tool (230) which is installed at a hub (194) of the wind turbine (180);
handing over the stator component (614) from the component exchange tool (230) to a handling equipment (250); and
removing the stator component (614) from the hub (194) and/or from the component exchange tool (230) to a predetermined unloading region (272) by controlling the handling equipment (250).

2. The method as set forth in the preceding claim, wherein the stator component is a stator segment (614) which comprises at least one stator winding (615).

3. The method as set forth in any one of the preceding claims, wherein transferring the stator component (614) comprises
fastening the stator component (614) to the component exchange tool (230) and/or unfastening the stator component (614) from the stator frame structure (110).

4. The method as set forth in the preceding claim, further comprising
removing at least one magnet (122) from a rotor frame structure (120) of the generator (100), before unfastening the stator component (614) from the stator frame structure (110), wherein,
with respect to an air-gap of the generator (100), the at least one magnet is located opposite to the stator component (614).

5. The method as set forth in any one of the preceding claims, wherein transferring the stator component (614) comprises
shifting the stator component (614) along an axial direction of the generator (100).

6. The method as set forth in the preceding claim, wherein shifting the stator component (614) comprises
moving a carriage device (542), which together with an exchange tool frame structure (232) forms the component exchange tool (230), from an inner position to an outer position wherein
the exchange tool frame structure (232) is mounted to the hub (194) and
the stator component (614) is temporarily attached to the carriage device (542).

7. The method as set forth in the preceding claim, wherein temporarily attaching the stator component (614) to the carriage device (542) comprises
(a) when the carriage device (542) is in the inner position, establishing a mechanical connection between the stator
component (614) and the carriage device (542)and releasing a mechanical connection between the stator
component (614) and the stator frame structure (110) ; and
(b) when the carriage device (542) is in the outer position, establishing a mechanical connection between the stator
component (614) and the handling equipment (250) and releasing the mechanical connection between the stator
component (614) and the carriage device (542).

8. The method as set forth in any one of the preceding claims, wherein the component exchange tool (230) is detachably mounted to the hub (194).

9. The method as set forth in any one of the preceding claims, further comprising
rotating the hub (194) from a second angular position to a first angular position such that
the stator component (614) is transferred from the stator frame structure (110) to the component exchange tool (230), when the hub (194) is in the second angular position, and the stator component (614) is handed over from the component exchange tool (230) to the handling equipment (250) when the hub (194) is in the first angular position.

10. The method as set forth in the preceding claim, wherein in the first angular position the component exchange tool (230) is located above a rotational axis (190a) of the generator (100).

11. The method as set forth in any one of the two preceding claims, wherein
rotating the hub (194) comprises
driving a rotor frame structure (120) of the generator (100) by means of at least one turning device being mounted to the stator frame structure (110) and engaging with the rotor frame structure (120).

12. The method as set forth in any one of the three preceding claims, further comprising
blocking a rotational movement of the hub (194) during transferring the stator component (614) and/or during handing over the stator component (614) to the handling equipment (250).

13. The method as set forth in any one of the preceding claims, wherein
the handling equipment comprises a crane system (250).

14. The method as set forth in any one of the preceding claims, wherein
the unloading region (272) is located on a roof (270) of the nacelle (184).

15. A method for installing a further stator component (614) at a generator (100) being installed at a nacelle (184) of a wind turbine (180), the method comprising
providing the further stator component (614) at a loading region (272);
moving the further stator component (614) by means of a controlled handling equipment (250) from the loading region (272) to a component exchange tool (230) which is installed at a hub (194) of the wind turbine (180);
handing over the further stator component (614) from the handling equipment (250) to the component exchange tool (230); and
transferring the further stator component (614) from the component exchange tool (230) to a stator frame structure (110) of the generator (100).

16. The method as set forth in the preceding claim, further comprising
rotating the hub (194) from a first angular position to a second angular position such that
the further stator component (614) is handed over from the handling equipment (250) to the component exchange tool (230) when the hub (194) is in the first angular position and
the further stator component (614) is transferred from the component exchange tool (230) to the stator frame structure (110) when the hub (194) is in the second angular position.

17. A method for exchanging stator components (614) of a generator (100) being installed at a nacelle (184) of a wind turbine (180), the method comprising
removing a stator component (614) from a stator frame structure (110) of the generator (100) in accordance with the method as set forth in any one of the preceding claims 1 to 13; and
installing a further stator component (614) at the stator frame structure (110) of the generator (100) in accordance with the method as set forth in any one of the preceding claims 14 to 15.

18. A component exchange tool (230) for exchanging stator components (614) of a generator (100) being installed at a nacelle (184) of a wind turbine (180), the component exchange tool (230) comprising
an exchange tool frame structure (232) being configured for being installed at a hub (194) of the wind turbine (180); and
a carriage device (542), which is movable along an axial direction of the generator (100) with respect to the exchange tool frame structure (232) and which is configured for receiving a stator component (614), whereby the stator component (614) is temporarily attached to the carriage device (542).

19. The component exchange tool (230) as set forth in the preceding claim, wherein
the carriage device (542) comprises a fork structure (544, 1244) which is configured for engaging with corresponding openings formed at or within the stator component (614).

20. The component exchange tool (230) as set forth in the preceding claim, wherein
the fork structure (1244) comprises two telescopic fork spikes (1260), each telescopic fork spike (1260) comprising
a fork carrier rail (1262);
a further fork carrier rail (1264) being shiftable along a longitudinal extension of the fork carrier rail (1262); and
an elongated component support element (1266) being movable along the longitudinal extension of both the fork carrier rail (1262) and the further fork carrier rail (1264).

21. The component exchange tool (230) as set forth in the preceding claim, wherein each telescopic fork spike (1260) further comprises
a first fork carriage element (1265) being fixed to the further fork carrier rail (1264) and being guided at the fork carrier rail (1262) and/or
a second fork carriage element (1267) being fixed to the elongated component support element (1266) and being guided also at the fork carrier rail (1262).

22. The component exchange tool as set forth in any one of the four preceding claims, wherein
the exchange tool frame structure (232) comprises
a support fragment (534) being configured to be attached to the rotor frame structure (120); and
at least one support leg (536) being fixedly mounted to the support fragment (534) and being configured to be mounted at the hub (194).

23. The component exchange tool (230) as set forth in any one of the five preceding claims, further comprising
a cover structure (240) which is movably attached to the exchange tool frame structure (232) and which is configured for protecting the stator component (614) from ambience when being received by the component exchange tool (230).

24. A wind turbine (180) for generating electrical power, in particular an off-shore wind turbine (180), the wind turbine (180) comprising
a tower (182);
a wind rotor (190), which is arranged at a top portion of the tower (182) and which comprises at least one blade (192) mounted to a hub;
an electric generator (100) comprising a stator frame structure (110), a rotor frame structure (120), and a plurality of stator components (614) being attached to the stator frame structure (110), wherein the rotor frame structure (120) is mechanically coupled with the wind rotor (190); and
a component exchange tool (230) as set forth in any one of the preceding claims 17 to 19 for exchanging stator components (614), wherein the exchange tool frame structure (232) is installed at the hub (194).

25. The wind turbine (180) as set forth in the preceding claim, further comprising
a spinner structure (195), which is attached to and which is covering the hub (194), wherein
the component exchange tool (230) is located within the spinner structure.

26. The wind turbine as set forth in any one of the two preceding claims, further comprising
a stator assembly (110) comprising the stator frame structure (110) and a plurality of stator components (614), in particular a plurality of stator segments (614); wherein in particular the electric generator (100) has an inner stator - outer rotor configuration.
